# EUROPÄISCHE PATENTSCHRIFT

(11) **EP 0 672 095 B1**
(45) Veröffentlichungstag und Bekanntmachung des Hinweises auf die Patenterteilung: **30.08.2000**
(21) Anmeldenummer: 94901911.1
(22) Anmeldetag: 29.11.1993
(51) Int. Cl.: C09K 5/06, B01J 19/30

(54) **WÄRMESPEICHERMEDIUM**
HEAT STORAGE MEDIUM
AGENT ACCUMULATEUR DE CHALEUR

(30) Priorität: 02.12.1992 DE 4240401; 19.12.1992 DE 4243202; 06.03.1993 DE 4307065
(43) Veröffentlichungstag der Anmeldung: 20.09.1995
(73) Patentinhaber: Schümann Sasol GmbH, 20457 Hamburg (DE)
(72) Erfinder: HILDEBRAND, Günter, D-06729 Rehmsdorf (DE); MATTHÄI, Michael, D-24558 Henstedt-Ulzburg (DE); MATZAT, Norbert, D-22457 Hamburg (DE); LAUDI, Rolf, D-22941 Bergteheide (DE); FIEBACK, Klaus, D-10369 Berlin (DE); AHRENS, Wolfgang, D-12107 Berlin (DE); KRÄMER, Thomas, D-74740 Adelsheim (DE)
(74) Vertreter: Müller, Enno, Dipl.-Ing.
(86) Internationale Anmeldenummer: EP9303346
(87) Internationale Veröffentlichungsnummer: WO9412588

(56) Entgegenhaltungen:
- EP-A- 0 522 259
- DE-A- 2 907 366
- GB-A- 2 011 607
- US-A- 4 253 983

## Beschreibung

Die Erfindung betrifft zunächst ein unter Ausbildung von Kristallstrukturen erstarrendes Wärmespeichermedium wie Paraffin für einen Latentwärmespeicher bzw. einen Latentkältespeicher.

Latentwärmespeicher dienen bekanntlich zur effektivitätssteigernden zeitlichen Entkoppelung von Wärme- bzw. Kälteerzeugung und nachfolgendem Wärme- bzw. Kälteverbrauch. Die Entkoppelung ermöglicht lange, durchgängige Laufzeiten von Wärme- bzw. Kälteerzeugern mit hohen Wirkungsgraden und geringen An-, Abfahr- und Stillstandskosten. Sie werden beispielsweise bei Anlagen zur Wärmeerzeugung aus Solarenergie oder aus fossilen Energieträgern verwendet, darüber hinaus aber auch in Kühlkreisläufen.

Zum Stand der Technik wird beispielsweise auf die DE-A1 27 41 829 verwiesen. Hieraus ist es bekannt, in einer Kunststoffhülle eingeschlossene Paraffinmengen als Wärmespeichermedium in einem Latentwärmespeicher zu benutzen. Die Kunststoffhüllen befinden sich wiederum in einem mit Wasser gefüllten Speichergefäß. Bei derartigen Latentwärmespeichern erfolgt der Wärmetransport lediglich über Wärmeleitung durch die Kunststoffumhüllung an das Paraffin. Man bezeichnet solche Speicher als statische Speicher.

Weiterhin sind sogenannte dynamische Latentwärmespeicher bekannt, wozu beispielsweise auf die DD 23 68 62 und die DD 28 01 13 verwiesen wird. Zum Stand der Technik ist in diesem Zusammenhang weiter auf die DE-A1 41 22 859 zu verweisen. Hierbei wird es als nachteilig angesehen, daß das Wärmespeichermedium wie Paraffin von dem Wärmeübertragermedium, etwa verdampfendes Wasser oder eine Flüssigkeit auf Alkoholbasis, nur schwer zu durchsetzen ist. Hierdurch sind Verzögerungen im Ansprechen des Latentwärmespeichers bei einer Wärmezufuhr zu verzeichnen.

Ausgehend von dem zuletzt dargestellten Stand der Technik ist es ein Ziel der Erfindung, ein Wärmespeichermedium wie Paraffin für einen Latentwärmespeicher (Latentkältespeicher) anzugeben, das insbesondere zu einem verbesserten Ansprechverhalten bei Wärmezufuhr führt. Weiter soll hierbei auch beachtet sein, daß den Anforderungen an eine Umweltverträglichkeit des Wärmespeichermediums nachgekommen wird.

Dieses Ziel ist beim Gegenstand des Anspruches 1 gelöst, wobei darauf abgestellt ist, daß die Kristallstrukturen durch ein Strukturadditiv mit Kristallmodifizierender wirkung vorzugsweise im Sinne von Hohlstrukturen, wie beispielsweise Hohlkegeln, modifiziert sind. Die im Stand der Technik für ein Wärmespeichermedium auf Basis Paraffin bekannte Plättchenform der Kristalle ändert sich entsprechend zu hohlkegelartigen oder rohrförmigen Kristallstrukturen. Erfindungsgemäß ist erkannt worden, daß es durch eine unmittelbare Modifikation der Kristallstrukturen des Wärmespeichermediums wie insbesondere Paraffin möglich ist, das Ansprechverhalten des Wärmespeichermediums bei einer Wärmezufuhr entscheidend zu verbessern. Überraschenderweise hat sich gezeigt, daß es durch eine solche Kristallmodifikation erreichbar ist, daß das Wärmespeichermedium wie Paraffin eine gleichsam poröse Struktur annimmt. Bei Wärmezufuhr sich bildender bspw. Wasserdampf dringt nicht nur in den unteren Bereich des Wärmespeichermediums ein, sondern durchsetzt sehr rasch das gesamte Wärmespeichermedium. Annähernd schlagartig ergibt sich somit ein Ansprechen, d.h. Aufschmelzen des Wärmespeichermediums und damit Einspeichern von Wärme. Soweit vorstehend und nachstehend im Zusammenhang mit der Erfindung Paraffin erwähnt ist, sind hierunter paraffinische Kohlenwasserstoffe, wie n-Paraffine (flüssig), Makroparaffine, Intermediate-Paraffine und mikrokristalline Wachse zu verstehen. Im einzelnen sind hierunter auch sogenannte Intermediate-Paraffine und mikrokristalline Wachse zusammengefaßt. In Ausgestaltung der Erfindung ist vorgesehen, daß das Strukturadditiv in dem Wärmespeichermedium homogen gelöst ist. Im einzelnen haben sich als Strukturadditive insbesondere solche auf Basis von Polyalkylmethacrylaten (PAMA) und Polyalkylacrylaten (PAA ) als Einzelkomponente oder in Kombination bewährt. Ihre kristallmodifizierende Wirkung wird dadurch hervorgerufen, daß die Polymermoleküle in die wachsenden Paraffinkristalle mit eingebaut werden und das Weiterwachsen dieser Kristallform verhindert wird. Aufgrund des Vorliegens der Polymermoleküle auch in assoziierter Form in der homogenen Lösung in Paraffin können auf die speziellen Assoziate Paraffine aufwachsen. Es werden Hohlkegel gebildet, die nicht mehr zur Bildung von Netzwerken befähigt sind. Aufgrund der synergistischen Wirkungsweise dieses Strukturadditives auf das Kristallisationsverhalten der Paraffine wird eine Hohlraumbildung und damit eine Verbesserung der Durchströmbarkeit des Wärmespeichermediums Paraffin (bspw. für Wasserdampf) gegenüber nicht derartig com-poundierten Paraffinen erreicht. Allgemein eignen sich als Strukturadditive auch Ethylen-Vinylacetat-Copolymere (EVA), Ethylen-Propylen-Copolymere (OCP), Dien-Styrol-Copolymere sowohl als Einzelkomponenten als auch im Gemisch sowie alkylierte Naphthaline (Paraflow). Der Anteil der Strukturadditive fängt bei einem Bruchteil von Gew.-%, realistischerweise bei etwa 0,01 Gew.-% an und zeigt insbesondere bis zu einem Anteil von etwa 1 Gew.-% spürbare Veränderungen im Sinne einer Verbesserung. Eine höhere Dosierung kann sich als nachteilig erweisen, da sehr viele, kleine Kristallite gebildet werden, die zu einer dichten Kristallpackung führen und damit die Durchströmbarkeit des Wärmespeichermediums negativ beeinflussen. Im einzelnen ist der Anteil von Strukturadditiven auch noch abhängig von der Schmelztemperatur des Wärmespeichermediums. Bei höherschmelzendem Wärmespeichermedium bzw. höherschmelzenden Paraffinen ist in der Regel zur Erreichung eines gleichen Erfolges ein höherer Gew.-% Anteil von Strukturadditiven erforderlich als bei niedrigschmelzenden Wärmespeichermedium. In weiterer Ausgestaltung der Erfindung ist vorgesehen, daß das Wärmespeichermedium im Falle der testen paraffinischen Kohlenwasserstoffe (Makroparaffine, Intermediate-Paraffine, mikrokristalline Wachse) flüssige Komponenten (niedrigschmelzende n- und iso-Alkane sowie Naphthene), einen sogenannten Ölanteil, enthält. Bekanntlich werden feste, paraffinische Kohlenwasserstoffe aus Vakuumdestillatfraktionen durch verschiedene technologische Trennschritte gewonnen, die einen gewissen Ölanteil bedingen. Es hat sich in bezug auf eine Verwendung als Wärmespeichermedium der hier näher beschriebenen Art als vorteilhaft herausgestellt, wenn der Ölanteil zwischen 0,1 und 10 Gew.-% eingestellt wird. Führt man dem Wärmespeichermedium bei dieser Ausgestaltung im verfestigten Zustand Wärme zu, ergibt sich der Effekt, daß die in gleichmäßiger Verteilung eingelagerten Olanteile aus dem Wärmespeichermedium gleichsam ausechwitzen und - der Schwerkraft folgend - nach unten ablaufen. Hierdurch werden gegenüber der erwähnten "Porosität" noch vergrößerte Wege in dem Wärmespeichermedium geschaffen, die eine rasche Durchdringung mit dem Wärmeübertragungsmedium weiter begünstigen. Ein solcher Ölanteil im Wärmespeichermedium ist meistens aber nur dann sinnvoll, wenn das Wärmespeichermedium bei Raumtemperatur verfestigt ist. Des weiteren ist es im Rahmen der Erfindung bevorzugt, daß die Kohlenstoff-Kettenlängen in dem Paraffin gezielt eingestellt werden, d.h. eine spezielle Schnittlegung vorgenommen wird, die so gewählt ist, daß sie vergleichsweise eng ist. Eine enge Schnittlegung bedeutet, daß nur Kettenlängen weniger Zahlen umfaßt sind. Beispielsweise C 14 bis C 16 oder C 20 bis C 23. Da bekanntlich, jedenfalls im großtechnischen Maßstab, wenn keine ganz besonderen Vorkehrungen getroffen werden, sich die Schnittlegung immer im Sinne einer Häufigkeitsverteilung ergibt, bedeutet die vorstehend erläuterte Maßnahme, daß jedenfalls der weitaus größte Anteil einer gegebenen Menge Wärmespeichermediums aus den wenige Zahlen umfassenden Kettenlängen gebildet ist. Im einzelnen wird die Schnittlegung nach der erwünschten Schmelztemperatur vorgenommen. Darüber hinaus hat es sich noch als besonders vorteilhaft erwiesen, die geradzahligen, normalen C-Ketten (n-Alkane) zu bevorzugen. Diese weisen in der benannten Isolierung ein überraschend hohes Wärmespeichervermögen bei Phasenwechsel auf. Hierbei ist in gleicher Weise zu berücksichtigen, daß es jedenfalls großtechnisch nicht oder nicht immer zu vertretbaren Kosten möglich ist, die C-Ketten "rein" im Sinne der Gradzahligkeit zu erzeugen. Jedenfalls ist es vorteilhaft, diese soweit wie möglich anzureichern. Eine weitere bevorzugte Ausgestaltung der Erfindung sieht vor, daß an sich bekannte Siedekörper bzw. Kristallkeimbildner ein solches spezifisches Gewicht aufweisen, daß sie zumindest in dem Wärmespeichermedium schweben. Da das Wärmespeichermedium je nach verflüssigtem oder verfestigtem Zustand unterschiedliche spezifische Gewichte aufweisen kann, ist speziell bevorzugt, daß diese Siedekörper bzw. Kristallkeimbildner an das spezifische Gewicht im verflüssigten Zustand angepaßt sind. Sind sie dort homogen verteilt, ergibt sich auch nach Erstarrung, selbst wenn dann unterschiedliche spezifische Gewichte vorliegen, keine Entmischung. Dieses spezifische Gewicht läßt sich beispielsweise durch Kunststoffteilchen oder durch Glasschaumteile erreichen. Die Siedekörper bzw. Kristallkeimbildner sind weiter bevorzugt relativ klein im Millimeter- bzw. Bruchteilbereich von Millimetern, so daß sie sehr fein verteilt sich in dem Wärmespeichermedium befinden können. Insbesondere in Kombination mit der oben erwähnten Maßnahme, durch einen Strukturbildner die Kristallstruktur des Wärmespeichermediums im Sinne von Hohlstrukturen zu modifizieren, erweisen sich diese Körperchen nicht nur als vorteilhaft im Sinne von Kristallkeimbildnern beim Kondensationsprozeß, sondern auch beim Sieden in dem Wärmespeichermedium. Die gleichsam porös eingestellte Struktur des Wärmespeichermediums wird bei Wärmezufuhr, wenn als Wärmeübertragungsmedium beispielsweise Wasser verwandt wird, von Wasserdampf durchsetzt, der an dem kühleren Wärmespeichermedium sogleich wieder kondensiert. Nachfolgender Dampf führt wiederum zu Siedeprozessen, die dann verstärkt durch die auch im Wärmespeichermedium verteilt angeordneten Körperchen praktisch gleichmäßig und unverzüglich in dem Wärmespeichermedium (wieder) einsetzen. Die Charakterisierung, daß die Siedekörper bzw. Kristallkeimbildner zumindest in dem Wärmespeichermedium schwebend ausgebildet sind (aufgrund ihres spezifischen Gewichtes) bedeutet, daß auch weitere (eine weitere Gruppe von solchen) Körperchen vorgesehen sein können, die auch in dem Wärmeübertragermedium schwebend ausgebildet sind. Dies insbesondere dann, wenn das Wärmeübertragermedium beispielsweise ein spezifisch leichteres Medium in bezug auf das Wärmespeichermedium, wie beispielsweise Alkohol, ist. Ungeachtet dessen ist es aber im Rahmen der Erfindung bevorzugt, daß auch in dem Wärmeübertragermedium Siedekörper bzw. Kristallkeimbildner enthalten sind (die aber in dem Wärmeübertragermedium regelmäßig nur eine Funktion als Siedekörper ausüben). Soweit das Wärmeübertragermedium Wasser ist, können diese Siedekörper spezifisch schwerer als Wasser sein und werden sich am Boden eines entsprechenden Latentwärmespeichers mithin ansammeln (da wiederum bei hierbei bevorzugten dynamischen Latentwärmespeichern aufgrund des spezifischen Gewichtes regelmäßig das leichtere Medium über dem schweren Medium sich absetzt). Eine Ausgestaltung der Körperchen auch in dem Wärmeübertragermedium im Sinne eines Schwebens oder annähernd Schwebens hat aber auch dahingehend Vorteile, daß dann, wenn das Wärmeübertragermedium spezifisch schwerer ist als das Wärmespeichermedium, diese Körperchen bei einsetzendem Siedevorgang besonders stark in das Wärmespeichermedium hineingeschleudert werden, was den erwünschten Schmelzprozeß des Wärmespeichermediums weiter beschleunigt. Wenn man auch die Funktionen hinsichtlich eines Keimbildens und hinsichtlich einer Unterdrückung eines Siedeverzuges unterscheiden kann, werden diese doch in der Regel durch dieselben Körperchen ausgelöst, so daß insoweit keine materialmäßige Unterscheidung erforderlich ist. Derartige Körperchen sind bevorzugt in der Größenordnung von 1 bis 10 Gew.-% in dem Wärmespeichermedium bzw. dem Wärmeübertragermedium enthalten. Es versteht sich, daß aber auch bereits Bruchteile von Vol.-% eine gewisse Wirkung erzeugen. Es kann des weiteren aber auch eine solche Ausgestaltung der Siedekörper bzw. Kristallkeimbildner vorgenommen werden, daß sie aufgrund ihres spezifischen Gewichtes teilweise in dem Wärmeübertragungsmedium und teilweise in dem Wärmespeichermedium schweben. Dies kann in einer praktischen Ausgestaltung bspw. dadurch erreicht sein, daß - wenn im Beispielsfall das Wärmeübertragungsmedium (Wasser) spezifisch schwerer ist als das Wärmespeichermedium (Paraffin), die Siedekörper bzw. Kristallkeimbildner ein spezifisches Gewicht aufweisen, welches zwischen dem spezifischen Gewicht des Wärmespeichermediums und dem spezifischen Gewicht des Wärmeübertragermediums liegt. Entsprechend würden sich dann diese Körperchen auf der Grenzschicht zwischen den beiden Medien anordnen. Das kann dahingehend ausgenutzt werden, daß diese Körperchen mit länglichen stiel- bzw. tentakelartigen Fortsätzen ausgeführt werden, mit welchen sie dann in das Wärmeübertragermedium hineinragen, und zwar um den Betrag, der erforderlich ist, um ihr Mehrgewicht in bezug auf das Wärmespeichermedium auszugleichen. Hierbei wird die Ausgestaltung weiter bevorzugt so getroffen, daß nur die stiel- bzw. tentakelartigen Fortsätze in das Wärmeübertragermedium hineinragen. Im übrigen können die Kriställkeimbildner/Siedekörper auch in ihrem spezifischen Gewicht so gewählt sein, daß sie sich nur in dem Wärmespeichermedium (schwebend) oder in dem Wärmeübertragermedium befinden. In weiterer bevorzugter Ausgestaltung ist vorgesehen, daß das Füllmedium mit einem Antischaummittel versehen ist. Antischaummittel sind für Paraffine oder paraffinähnliche Medien grundsätzlich bekannt. Es kann insoweit auf die diesbezügliche Literatur verwiesen werden. In bezug auf ein Füllmedium für einen Latentwärmespeicher oder Latentkältespeicher bekommt ein solches Antischaummittel aber eine ganz wesentliche Bedeutung. Eine Schaumbildung des Wärmespeichermediums führt zu örtlich schlechteren Wärmeübergangszahlen an Wärmeübertragerflächen und damit zu verringerten Wärmeübertragungsleistungen. Durch die Beigabe eines Antischaummittels zu dem Wärmespeichermedium läßt sich hier eine weitere Verbesserung erreichen. Bekannt sind Antischaummittel, beispielsweise auf Basis von Silikonen, Polyalkoxylaten Fettalkoholalkoxylaten oder Carbonsäureestern. In weiterer Ausgestaltung ist auch vorgesehen, daß das Wärmespeichermedium ein Antioxydans aufweist. Dieses beugt einem Alterungsprozeß des Wärmespeichermediums, beispielsweise durch Aufspaltung der Kohlenstoffketten, vor. Es sind Antioxydantien auf Basis von mehrfach alkylierten Phenolen sowie von stickstoffsubstituierten Phenylendiaminen in bezug auf Paraffine bekannt. Auch diesbezüglich wird auf die Literatur betreffend Paraffine verwiesen.

Gegenstand der Erfindung ist des weiteren ein Zugabemittel für ein unter Ausbildung von Kristallstrukturen, kristallisierendes Wärmespeichermedium wie Paraffin für einen Latentwärmespeicher (Latentkältespeicher), welches Zugabemittel ein die Kristallstrukturen im Sinne von Hohlstrukturen, wie beispielsweise Hohlkegeln, modifizierendes Strukturadditiv enthält. Im einzelnen wird bezüglich des Strukturadditivs auf die Ausführungen weiter oben verwiesen. Das Zugabemittel kann vorhandenen Wärmespeichermedien, insbesondere auf Paraffin-Basis, zugegeben werden, um deren Eigenschaften in der weiter oben im einzelnen beschriebenen Weise zu verbessern. Des weiteren kann das Zugabemittel noch Siedekörper enthalten, insbesondere solche unterschiedlichen spezifischen Gewichtes, die dazu geeignet sind, einerseits in dem Wärmespeichermedium sich schwebend zu befinden, andererseits in dem Wärmeübertragermedium zu schweben oder sich abzusetzen. Weiter kann das Zugabemittel auch ein Antischaummittel und/oder ein Antioxydans enthalten, wobei im einzelnen zu den vorerwähnten Bestandteilen wiederum auf die Beschreibung weiter oben verwiesen wird.

Gegenstand der Erfindung ist darüber hinaus auch ein Latentwärmespeicher bzw. Latentkältespeicher, der ein Wärmespeichermedium in einer der Ausführungsformen, wie weiter vorne beschrieben, enthält. In diesem Zusammenhang ist jedoch hinsichtlich der Siedekörper bzw. Kristallkeimbildener noch eine besondere Ausgestaltung bevorzugt. Diese schlägt vor, daß die Siedekörper bzw. Kristallkeimbildner als Festeinbauten in dein Latentwärmespeicher vorgesehen sind. Insbesondere können die Siedekörper bzw. Kristallkeimbildner hierbei durch flächige Elemente, weiter vorzugsweise gekrümmte flächige Elemente relalisiert sein. Diese flächigen Elemente sind dabei geeigneterweise so vorgesehen, daß sie teilweise in den Bereich des wärmeübertragermediums und teilweise in den Bereich des Wärmespeichermediums hineinragen.

Endlich ist Gegenstand der Anmeldung auch die Verwendung von Paraffin mit einem bestimmten Ölanteil, wie weiter oben näher beschrieben, zur Verwendung in einem Wärmespeichermedium für einen Latentwärmespeicher.

Nachstehend ist anhand der beigefügten Zeichnung beispielhaft ein Latentwärmespeicher mit einem Wärmespeichermedium der hier beschriebenen Art erläutert. Hierbei zeigt:
- Fig. 1: einen hermetisch verschlossenen Speicherbehälter, mit einer Lupendarstellung zur schematischen Verdeutlichung der Hüllstrukturen und Siedekörper/Kristallkeimbildner in dem Wärmespeichermedium;
- Fig. 2: eine Darstellung gemäß Fig. 1, mit modifizierten Siedekörpern/Kristallkeimbildnern;
- Fig. 3: eine Darstellung gemäß Fig. 1 bzw. Fig. 2, mit Festeinbauten als Siedekörpern bzw. Kristallkeimbildner.

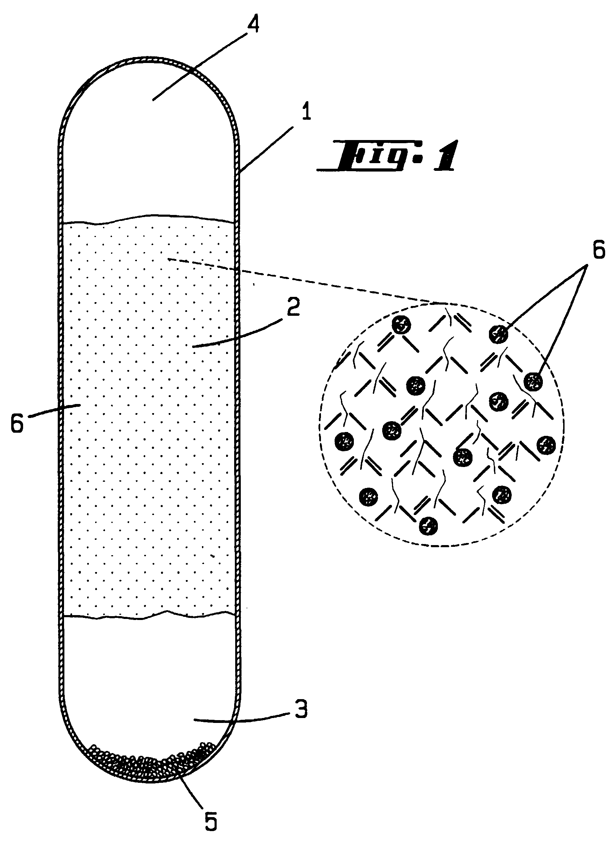

Fig. 1 zeigt einen hermetisch verschlossenen Speicherbehälter, der insbesondere aus einem metallischen Werkstoff wie vorzugsweise Aluminium besteht. Bei dem in der Zeichnung dargestellten Zustand befindet sich das Wärmespeichermedium 2 in verfestigtem Zustand. Es handelt sich um verfestigtes Paraffin. Im unteren Bereich des Latentwärmespeichers 1 befindet sich im wesentlich reines Wasser 3 als Wärmeübertragermedium, während sich im oberen Bereich 4 des Latentwärmespeichers 1 ein Unterdruck-Luftraum oder Vakuum befindet.

In der Lupen-Darstellung ist - schematisch - die Kristallstruktur des Wärmespeichermediums 2 angedeutet. Es sind hohlkegelartige Strukturen, die insgesamt dann zu der erwünschten Mikro-"Porosität" des Wärmespeichermediums 2 führen, zu erkennen.

In dem Wärmeübertragermedium 3 sind Siedekörper 5 angeordnet, die bei Zufuhr von Wärme, die beispielsweise über einen nicht dargestellten, in den Latentwärmespeicher 1 im Bereich des Wärmeübertragermediums 3 hineinragenden Wärmetauscher eingebracht werden kann oder einfach durch eine Erwärmung des Latentwärmespeichers 1 an seinem Boden erreicht sein kann, für ein annähernd gleichzeitiges Sieden des Wassers 3 sorgen. In dem Wärmespeichermedium 2 sind desgleichen - weitere - Siedekörper 5 bzw. Kristallkeimbildner 6 angeordnet. Aufgrund Ihres spezifischen Gewichtes schweben die Kristallkeimbildner 6 auch bei verflüssigtem Wärmespeichermedium 2 in dem Wärmespeichermedium 2.

Bei Wärmezufuhr - im Bodenbereich - zu dem Latentwärmespeicher 1 fängt das Wasser 3 bei einer bestimmten Temperatur, die im wesentlichen durch den Unterdruck im Raum 4 bestimmt ist, an zu sieden und der entstehende Wasserdampf dringt in das Wärmespeichermedium 2 ein. Aufgrund eines in dem Wärmespeichermedium 2 homogen verteilten Strukturadditivs besitzt das Wärmespeichermedium 2 im verfestigten Zustand einen gleichsam porösen Charakter, so daß der Wasserdampf eine große Oberfläche nahezu schlagartig beaufschlagen kann und entsprechend plötzlich das Wärmespeichermedium 2 einen Phasenwechsel durchläuft und verflüssigt. Der Wasserdampf dringt somit rasch bis in den oberen Bereich 4, wo gewöhnlich aufgrund einer Wärmeabfuhr eine Kondensation erfolgt. Der Wasserdampf sammelt sich in Wassertropfen und läuft wieder in den Bodenbereich des Latentwärmespeichers 1 zurück. Wird dem Latentwärmespeicher 1 in seinem Kopfbereich mehr Wärme entzogen als im Bodenbereich zugeführt wird, entlädt sich der Latentwärmespeicher 1 und bei Unterschreiten einer bestimmten Temperatur durchläuft das Wärmespeichermedium 2 wiederum einen Phasenwechsel (von flüssig zu fest), wonach sich wieder der Zustand einstellt, wie er auf der beigefügten Zeichnung dargestellt ist.

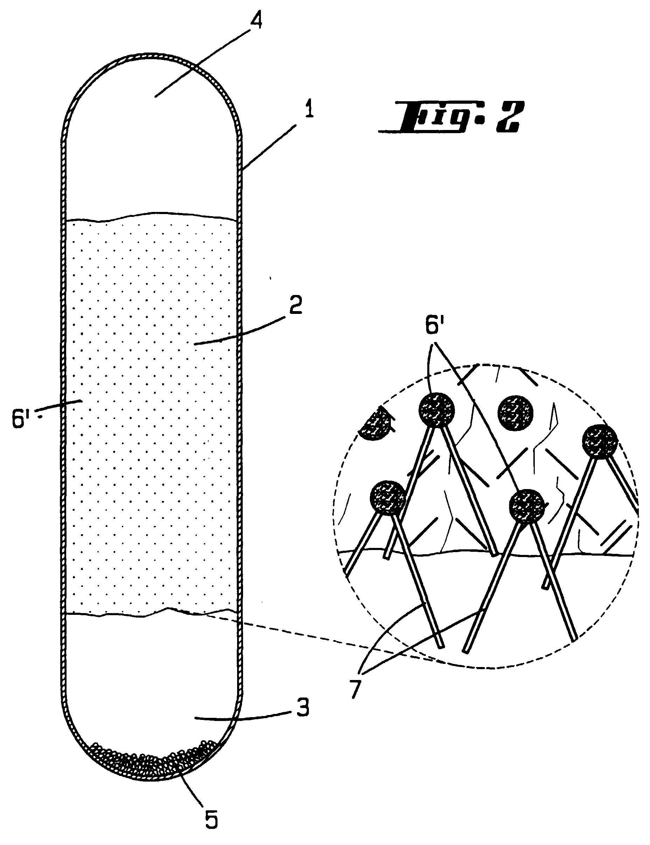

In Fig. 2 sind - im wesentlichen in schematischer Form - Siedekörper bzw. Kristallkeimbildner 6' dargestellt, die stiel- bzw. tentakelartige Fortsätze 7 aufweisen. Diese können insgesamt etwas schwerer ausgebildet sein als die eigentlichen - hier kugelförmig dargestellten -Kristallkeimbildner 6'. Insgesamt ist das Gewicht eines solchen Körperchens spezifisch schwerer als das Gewicht des Wärmespeichermediums 2, aber leichter als das Gewicht des Wärmeübertragermediums 3, so daß die Siedekörper bzw. Kristallkeimbildner 6' unter Ausnutzung des Auftriebs in dem Wärmeübertragermedium 3 schwimmen. Aus dieser Erläuterung wird auch deutlich, daß die Körperchen 6', soweit sie sich bspw. aus unterschiedlichen Materialien zusammensetzen, auch Teile, bspw. die Fortsätze 7 besitzen, die aus einem Material bestehen, das auch spezifisch schwerer ist als das Wärmeübertragermedium 3.

Weiter ist in Fig. 2 dargestellt, daß auch weiterhin zusätzlich noch Siedekörper 5 bzw. Kristallkeimbilder 6 in dem Latentwärmespeicher 1 vorhanden sind in der Form wie sie in bezug auf Fig. 1 bereits beschrieben sind.

Durch die Fortsätze 7 ergeben sich noch wesentliche Effekte in bezug auf ein schnelles Ansprechen des Latentwärmespeichers 1. Entlang den Fortsätzen 7 können sich, insbesondere wenn diese gut wärmeleitend ausgebildet sind, rasch Kanäle aus geschmolzenem Wärmespeichermedium 2 bilden, durch welche das Wärmeübertragermedium in weitere Bereiche des Wärmespeichermediums 2 strömen kann.

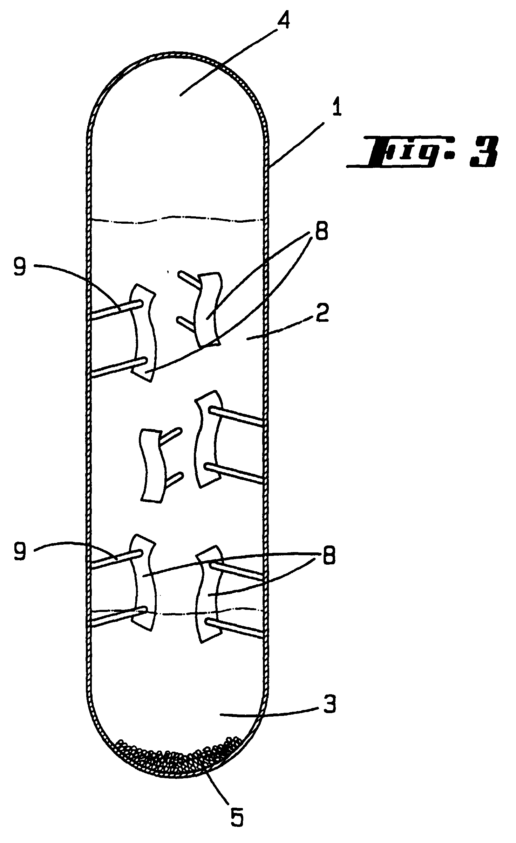

Ein vergleichbarer Effekt ist auch bei der Ausgestaltung gegeben, der in Fig. 3 dargestellt ist, jedenfalls soweit die dort vorgesehenen Festeinbauten 8 sowohl in das Wärmeübertragermedium 3 wie in das Wärmespeichermedium 2 hineinragen. Die Festeinbauten 8 sind bspw. über Halterungen 9 an dem Speicherbehälter gehaltert.

Es ist angedeutet, daß die Festeinbauten 8 bevorzugt gekrümmte Flächen sind. Es sind noch mannigfaltige weitere Gestaltungen der gekrümmten Flächen denkbar.

## Patentansprüche

1. Latentwärmespeicher (1) (Latentkältespeicher) mit einem unter Ausbildung von Kristallstrukturen erstarrenden Wärmespeichermedium (2) wie Paraffin, dadurch gekennzeichnet, daß die Kristallstrukturen durch ein Strukturadditiv mit kristallmodifizierender Wirkung vorzugsweise im Sinne von Hohlstrukturen, wie beispielsweise Hohlkegeln, modifiziert sind.

2. Latentwärmespeicher nach Anspruch 1, dadurch gekennzeichnet, daß das Strukturadditiv in dem Wärmespeichermedium (2) homogen gelöst ist.

3. Latentwärmespeicher nach einem der vorhergehenden Ansprüche, dadurch gekennzeichnet, daß das Strukturadditiv zur Verbindungsklasse der Polyalkyl(meth)acrylate gehört.

4. Latentwärmespeicher nach einem der vorhergehenden Ansprüche, dadurch gekennzeichnet, daß das Strukturadditiv zwischen 0,01 und 1 Gew.-% dem Wärmespeichermedium (2) beigegeben ist.

5. Latentwärmespeicher nach einem der vorhergehenden Ansprüche, dadurch gekennzeichnet, daß das Wärmespeichermedium (2) einen (ungecrackten) Ölanteil aufweist.

6. Latentwärmespeicher nach Anspruch 5, dadurch gekennzeichnet, daß der Ölanteil zwischen 0,1 und 10 Gew.-% liegt.

7. Latentwärmespeicher nach einem der vorhergehenden Ansprüche, dadurch gekennzeichnet, daß das Wärmespeichermedium (2) paraffinische Kohlenwasserstoffe in enger Schnittlegung aufweist.

8. Latentwärmespeicher nach Anspruch 7, dadurch gekennzeichnet, daß die geradzahligen, normalen C-Ketten (n-Alcane) bevorzugt sind.

9. Latentwärmespeicher nach einem der vorhergehenden Ansprüche, wobei Siedekörper (5) bzw. Kristallkeimbildner (6) enthalten sind, dadurch gekennzeichnet, daß die Siedekörper bzw. Kristallkeimbildner (6) ein solches spezifisches Gewicht aufweisen, daß sie zumindest in dem Wärmespeichermedium (2) schweben.

10. Latentwärmespeicher nach Anspruch 9, dadurch gekennzeichnet, daß Siedekörper (5)/Kristallkeimbildner (6) unterschiedlicher Dichte enthalten sind.

11. Latentwärmespeicher nach einem der Ansprüche 9 oder 10, dadurch gekennzeichnet, daß die Siedekörper (5)/Kristallkeimbildner (6) in einem Gewichtsanteil von 1 bis 10 % enthalten sind.

12. Latentwärmespeicher nach einem der Ansprüche 9 bis 11, dadurch gekennzeichnet, daß die Siedekörper (5) /Kristallkeimbildner (6) Glaskörper, Glasschaumkörper, Kunststoffkörper oder dgl. sind.

13. Latentwärmespeicher nach einem der Ansprüche 9 bis 12, dadurch gekennzeichnet, daß die Siedekörper (5)/Kristallkeimbildner (6) ein solches spezifisches Gewicht aufweisen, daß sie teilweise in dem Wärmeübertragermedium (3) und teilweise in dem Wärmespeichermedium (2) schweben.

14. Latentwärmespeicher nach einem der Ansprüche 9 bis 13, dadurch gekennzeichnet, daß die Siedekörper (5)/Kristallkeimbildner (6) stielartige Fortsätze (7) aufweisen.

15. Latentwärmespeicher nach Anspruch 14, dadurch gekennzeichnet, daß lediglich die stielartigen Fortsätze (7) aus dem Wärmespeichermedium (2) in das Wärmeübertragermedium (3) hineinragen.

16. Latentwärmespeicher nach einem der vorhergehenden Ansprüche, dadurch gekennzeichnet, daß ein Antischaummittel enthalten ist, vorzugsweise in einem Gewichtsanteil von 0,01 bis 5 Gew.-%.

17. Latentwärmespeicher nach Anspruch 16, dadurch gekennzeichnet, daß das Antischaummittel aus einem Material auf Basis von Silikonen, Polyalkoxylaten, Fettalkoholalkoxylaten oder Carbonsäureestern besteht.

18. Latentwärmespeicher nach einem der vorhergehenden Ansprüche, dadurch gekennzeichnet, daß ein Antioxydansmittel enthalten ist, vorzugsweise in einem Gewichtsanteil von 0,001 bis 0,1 Gew.-%.

19. Verwendung eines Strukturadditivs mit kristallmodifizierender Wirkung in einem Latentwärmespeicher (Latentkältespeicher) mit einem unter Ausbildung von Kristallstrukturen erstarrenden Wärmespeichermedium wie Paraffin, wodurch die Kristallstrukturen vorzugsweise im Sinne von Hohlstrukturen, wie beispielsweise Hohlkegeln, modifiziert werden.

20. Verwendung nach Anspruch 19, dadurch gekennzeichnet, daß das Strukturadditiv der Verbindungsklasse der Polyalkyl(meth)acrylate angehört.

21. Verwendung nach einem der Ansprüche 19 oder 20, dadurch gekennzeichnet, daß Siedekörper (5) bzw. Kristallkeimbildner (6) enthalten sind, die ein solches spezifisches Gewicht aufweisen, daß sie zumindest in dem Wärmeträgermedium (2) schweben.

22. Verwendung nach Anspruch 21, dadurch gekennzeichnet, daß Siedekörper (5)/Kristallkeimbildner (6) unterschiedlicher Dichte enthalten sind.

23. Verwendung nach einem der Ansprüche 21 oder 22, dadurch gekennzeichnet, daß die Siedkörper (5) bzw. Kristallkeimbildner (6) Glaskörper, Glasschaumkörper, Kunststoffkörper oder dgl. sind.

24. Verwendung nach einem der Ansprüche 19 bis 23, dadurch gekennzeichnet, daß ein Antischaummittel enthalten ist.

25. Verwendung nach Anspruch 24, dadurch gekennzeichnet, daß das Antischaummittel aus einem Material auf Basis von Silikonen, Polyalkoxylaten, Fettalkoholalkoxylaten oder Casrbonsäureestern Silikon besteht.

26. Verwendung nach einem der Ansprüche 19 bis 25, dadurch gekennzeichnet, daß ein Antioxydans enthalten ist.

## Claims

1. A latent heat store (1) (latent cold store) having a heat storage medium (2) which forms crystal structures on solidifying, such as paraffin, characterised in that the crystal structures are modified by a structure additive having a crystal-modifying effect, preferably in the sense of hollow structures, such as, for example, hollow cones.

2. A latent heat store according to Claim 1, characterised in that the structure additive is homogeneously dissolved in the heat storage medium (2).

3. A latent heat store according to any one of the preceding claims, characterised in that the structure additive belongs to the compound class of the polyalkyl(meth)acrylates.

4. A latent heat store according to any one of the preceding claims, characterised in that the structure additive is added to the heat storage medium in a percentage by weight of between 0.01 and 1.

5. A latent heat store according to any one of the preceding claims, characterised in that the heat storage medium (2) contains an (uncracked) oil component.

6. A latent heat store according to Claim 5, characterised in that the oil component is between 0.1 and 10 weight %.

7. A latent heat store according to any one of the preceding claims, characterised in that the heat storage medium (2) contains paraffinic hydrocarbons in close interfacial association.

8. A latent heat store according to Claim 7, characterised in that the even-numbered, normal C-chains (n-alkanes) are preferred.

9. A latent heat store according to any one of the preceding claims, boiling bodies (5) and/or seed crystal components (6) being included, characterised in that the boiling bodies and/or seed crystal components (6) have a specific gravity such that they are suspended at least in the heat storage medium (2).

10. A latent heat store according to Claim 9, characterised in that boiling bodies (5)/seed crystal components (6) of different density are included.

11. A latent heat store according to either one of Claims 9 or 10, characterised in that the boiling bodies (5)/seed crystal components (6) are included in a percentage by weight of from 1 to 10.

12. A latent heat store according to any one of Claims 9 to 11, characterised in that the boiling bodies (5)/seed crystal components (6) are glass bodies, glass bubble bodies, plastics bodies, or the like.

13. A latent heat store according to any one of Claims 9 to 12, characterised in that the boiling bodies (5)/seed crystal components (6) have a specific gravity such that they are suspended partially in the heat transfer medium (3) and partially in the heat storage medium (2).

14. A latent heat store according to any one of Claims 9 to 13, characterised in that the boiling bodies (5)/seed crystal components (6) have stalk-like continuations (7).

15. A latent heat store according to Claim 14, characterised in that only the stalk-like continuations (7) project from the heat storage medium (2) into the heat transfer medium (3).

16. A latent heat store according to any one of the preceding claims, characterised in that an anti-foaming agent is included, preferably in a percentage by weight of from 0.01 to 5.

17. A latent heat store according to Claim 16, characterised in that the anti-foaming agent comprises a material based on silicones, polyalkoxylates, fatty alcohol alkoxylates or carboxylic acid esters.

18. A latent heat store according to any one of the preceding claims, characterised in that an antioxidizing agent is included, preferably in a percentage by weight of from 0.001 to 0.1.

19. Use of a structure additive having a crystal-modifying effect in a latent heat store (latent cold store) having a heat storage medium which forms crystal structures on solidifying, such as paraffin, the crystal structures being modified, preferably in the sense of hollow structures, such as, for example, hollow cones.

20. Use according to Claim 19, characterised in that the structure additive belongs to the compound class of the polyalkyl(meth)acrylates.

21. Use according to either one of Claims 19 or 20, characterised in that boiling bodies (5) and/or seed crystal components (6) are included, which bodies and/or components have a specific gravity such that they are suspended at least in the heat transfer medium (2).

22. Use according to Claim 21, characterised in that boiling bodies (5)/seed crystal components (6) of different density are included.

23. Use according to either one of Claims 21 or 22, characterised in that the boiling bodies (5) and/or seed crystal components (6) are glass bodies, glass bubble bodies, plastics bodies, or the like.

24. Use according to any one of Claims 19 to 23, characterised in that an anti-foaming agent is included.

25. Use according to Claim 24, characterised in that the anti-foaming agent comprises a material based on silicones, polyalkoxylates, fatty alcohol alkoxylates or carboxylic acid esters.

26. Use according to any one of Claims 19 to 25, characterised in that an antioxidant is included.

## Revendications

1. Accumulateur de chaleur latente (1) (accumulateur de froid latent), avec un fluide accumulateur de chaleur (2) se solidifiant en constituant des structures cristallines, telles que la paraffine, caractérisé en ce que les structures cristallines sont modifiées au moyen d'un additif de structure ayant un effet modifiant le réseau cristallin, de préférence dans le sens de formation de structures creuses, telles que par exemple des cônes creux.

2. Accumulateur de chaleur latente selon la revendication 1, caractérisé en ce que l'additif de structure est dissous de façon homogène dans le fluide accumulateur de chaleur (2).

3. Accumulateur de chaleur latente selon l'une des revendications précédentes, caractérisé en ce que l'additif de structure appartient à la classe des composés des polyalkyl(méth)acrylates.

4. Accumulateur de chaleur latente selon l'une des revendications précédentes, caractérisé en ce que l'additif de structure est ajouté au fluide accumulateur de chaleur (2) en une teneur comprise entre 0,01 et 1 % en poids.

5. Accumulateur de chaleur latente selon l'une des revendications précédentes, caractérisé en ce que le fluide accumulateur de chaleur (2) présente une proportion d'huile (non craquée).

6. Accumulateur de chaleur latente selon la revendication 5, caractérisé en ce que la proportion d'huile est située entre 0,1 et 10 % en poids.

7. Accumulateur de chaleur latente selon l'une des revendications précédentes, caractérisé en ce que le fluide accumulateur de chaleur (2) comporte des hydrocarbures paraffiniques à longueur de chaîne de coupe étroite.

8. Accumulateur de chaleur latente selon la revendication 7, caractérisé en ce que les chaînes de carbones droites, de nombre paire (n-alcanes) sont préférées.

9. Accumulateur de chaleur latente selon l'une des revendications précédentes, contenant des corps d'ébullition (5), et/ou des formateurs de germes de cristallisation (6), caractérisé en ce que les corps d'ébullition et/ou les formateurs de germes de cristallisation (6) ont un poids spécifique tel qu'ils flottent au moins dans le fluide accumulateur de chaleur (2).

10. Accumulateur de chaleur latente selon la revendication 9, caractérisé en ce que sont contenus des corps d'ébullition (5)/des formateurs de germes de cristallisation (6) de masses volumiques différentes.

11. Accumulateur de chaleur latente selon l'une des revendications 9 ou 10, caractérisé en ce que les corps d'ébullition (5)/les formateurs de germes de cristallisation (6) sont contenus en une proportion en poids allant de 1 à 10 %.

12. Accumulateur de chaleur latente selon l'une des revendications 9 à 11, caractérisé en ce que les corps d'ébullition (5)/les formateurs de germes de cristallisation (6) sont des corps en verre, des corps en mousse de verre, des corps en matière synthétique ou analogues.

13. Accumulateur de chaleur latente selon l'une des revendications 9 à 12, caractérisé en ce que les corps d'ébullition (5)/les formateurs de germes de cristallisation (6) présentent un poids spécifique tel qu'ils flottent partiellement dans le fluide caloporteur (3) et partiellement dans le fluide accumulateur de chaleur (2).

14. Accumulateur de chaleur latente selon l'une des revendications 9 à 13, caractérisé en ce que les corps d'ébullition (5)/les formateurs de germes de cristallisation (6) présentent des prolongements (7) du genre de tiges.

15. Accumulateur de chaleur latente selon la revendication 14, caractérisé en ce que seuls les prolongements (7) du genre de tiges issus du fluide accumulateur de chaleur (2) pénètrent dans le fluide caloporteur (3).

16. Accumulateur de chaleur latente selon l'une des revendications précédentes, caractérisé en ce qu'est contenu un agent anti-mousse, de préférence en une proportion en poids comprise dans la plage allant de 0,01 à 5 % en poids.

17. Accumulateur de chaleur latente selon la revendication 16, caractérisé en ce que l'agent anti-mousse consiste en un matériau à base de silicones, de polyalcoxylates, alcoxylates d'alcools gras ou d'esters d'acide carbonique.

18. Accumulateur de chaleur latente selon l'une des revendications précédentes, caractérisé en ce qu'est contenu un agent anti-oxydant, de préférence en une proportion de 0,01 à 0,1 % en poids.

19. Utilisation d'un additif de structure à effet modificateur du réseau cristallin, dans un accumulateur de chaleur latente (accumulateur de froid latent), avec un fluide accumulateur de chaleur se solidifiant en constituant des structures cristallines, telles que de la paraffine, les structures cristallines étant de préférence modifiées dans le sens de formation de structures creuses, telles que par exemple de cônes creux.

20. Utilisation selon la revendication 19, caractérisée en ce que l'additif de structure appartient à la classe de composés des polyalkyl(méth)acrylates.

21. Utilisation selon l'une des revendications 19 ou 20, caractérisée en ce que sont contenus des corps d'ébullition (5) et/ou des formateurs de germes de cristallisation (6) présentant un poids spécifique tel qu'ils flottent au moins dans le fluide accumulateur de chaleur (2).

22. Utilisation selon la revendication 21, caractérisée en ce que sont contenus des corps d'ébullition (5)/ des formateurs de germes de cristallisation (6) de masses volumiques différentes.

23. Utilisation selon l'une des revendications 21 ou 22, caractérisée en ce que les corps d'ébullition (5) et/ou les formateurs de germes de cristallisation (6) sont des corps en verre, des corps en mousse de verre, des corps en matière synthétique ou analogues.

24. Utilisation selon l'une des revendications 19 à 23, caractérisée en ce qu'est contenu un agent anti-mousse.

25. Utilisation selon la revendication 24, caractérisée en ce que l'agent anti-mousse est constitué d'un matériau à base de silicones, de polyalcoxylates, alcoxylates d'alcools gras ou d'esters d'acide carbonique.

26. Utilisation selon l'une des revendications 19 à 25, caractérisée en ce qu'est contenu un antioxydant.
